# FASCICULE DE BREVET EUROPEEN

(11) **EP 1 237 738 B1**
(45) Date de publication et mention de la délivrance du brevet: **29.06.2005**
(21) Numéro de dépôt: 00985014.0
(22) Date de dépôt: 13.11.2000
(51) Int. Cl.: B60C 15/00, B60C 15/06

(54) **PNEUMATIQUE AVEC ZONE BASSE COMPORTANT UNE CONCENTRATION DE FILS**
LUFTREIFEN MIT NIEDRIEGER ZONE, DIE EINE FADENKONZENTRATION ENTHÄLT
TYRE WITH LOW ZONE COMPRISING A CONCENTRATION OF WIRES

(30) Priorité: 18.11.1999 FR 9914621
(43) Date de publication de la demande: 11.09.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: COSTA PEREIRA, Pedro, F-63000 Clermont-Ferrand (FR); GUERINON, Bernard, F-63100 Clermont-Ferrand (FR)
(74) Mandataire: Dequire, Philippe Jean-Marie Denis
(86) Numéro de dépôt international: PCT/EP2000/011190
(87) Numéro de publication internationale: WO 2001/036219

(56) Documents cités:
- WO-A-82/04225
- FR-A- 2 771 050
- US-A- 3 547 178
- US-A- 4 580 610
- US-A- 5 660 656
- US-A- 5 849 117

## Description

La présente invention concerne les pneumatiques. Plus particulièrement, elle concerne la disposition des fils de renforcement dans les flancs et dans les bourrelets; elle concerne également l'ancrage des fils de carcasse dans le bourrelet et les renforcements de différentes portions du bourrelet ou du flanc.

Le renforcement de carcasse des pneumatiques est à l'heure actuelle constitué par une ou plusieurs nappes, le plus souvent radiales, retournées autour d'une ou de plusieurs tringles disposées dans les bourrelets. Les bourrelets constituent le moyen permettant de fixer le pneumatique sur la jante. La rigidité du bourrelet ainsi constitué est très grande.

Pour certaines applications particulières où le pneumatique peut par exemple être soumis à des charges plus importantes ou subir des chocs plus violents, etc, -il peut s'avérer souhaitable de pouvoir affiner certaines caractéristiques telles la rigidité, la résistance aux impacts, etc. Par ailleurs, afin de faciliter l'automatisation de certaines étapes du processus de fabrication des pneumatiques, il peut s'avérer avantageux de revoir !a nature et/ou la disposition de certains des éléments constituants.

Dans la technique actuelle, il est assez difficile d'assurer une modulation des caractéristiques du flanc et/ou du bourrelet. Le flanc doit présenter une souplesse importante, et le bourrelet doit au contraire présenter une importante rigidité. Par ailleurs, les renforts que l'on dispose dans cette partie du pneumatique présentent toujours inévitablement une discontinuité: au niveau de l'extrémité radialement supérieure du retournement de carcasse, on passe sans transition dans une zone dépourvue de ce retournement de carcasse, zone qui- est donc inévitablement moins rigide.

Pour rappel, "radialement vers le haut", ou "radialement supérieur" signifie vers les plus grands rayons. Dans le cas des carcasses radiales, on connaît déjà d'autres principes de conception qui permettent d'éviter les retournements autour d'une tringle. A titre d'exemple, on peut citer le brevet US 3 072 171, dans lequel on proposait de supprimer le retournement des nappes de carcasse, et de disposer des fils orientés circonférentiellement. Dans la structure connue, il est cependant difficile d'assurer un ancrage suffisamment résistant des fils de carcasse aux fils orientés circonférentieliement, ce qui fait que cette proposition n'a jamais connu d'application réelle.

On connaît par ailleurs du document EP 0 582 196, une façon d'agencer les renforts de la nappe carcasse dans les bourrelets, en disposant de façon adjacente aux renforts des filaments circonférentiels, le tout étant noyé dans une gomme de liaison à haut module d'élasticité. Plusieurs agencements sont proposés dans ce document. Dans tous les cas, on retrouve plus de fils de renfort axialement internes par rapport à la structure de renfort que de fils axialement externes.

On connaît également le document FR 2 771 050, qui décrit un bourrelet sans tringle traditionnelle pour pneumatique. L'ancrage de la nappe carcasse est réalisé par au moins une première couche comportant des éléments de renforcement inextensibles. Dans la plupart des exemples de réalisation présentés, les éléments de renforcement forment des alignements s'étendant depuis la base du bourrelet vers une zone radiale située au delà du crochet de jante.

Un premier but de l'invention consiste à pallier ces différents inconvénients.

Un autre but de l'invention est de proposer un type d'agencement des différents éléments constituants d'un pneumatique afin de pouvoir affiner certaines caractéristiques telles la rigidité, la résistance aux impacts, etc.

Un autre but poursuivi par l'invention est de proposer une structure de renforcement pour pneumatique qui se prête aisément à une fabrication mécanisée.

Un autre but poursuivi par l'invention est de proposer une structure de renforcement pour pneumatique qui prend en compte les différents efforts mécaniques en présence dans les différentes zones des bourrelets lors du fonctionnement, notamment à pression nominale.

Un autre but poursuivi par l'invention est de proposer un agencement de la zone basse du pneumatique qui procure un ancrage efficace et durable de la structure de renfort dans les bourrelets du pneumatique.

Pour ce faire, l'invention prévoit un pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc et comportant une zone d'appui axial s'étendant sensiblement entre la base du bourrelet et une position radiale de ce bourrelet correspondant sensiblement à la position de la bordure radiale du crochet d'une jante pour laquelle ledit pneumatique est adapté, les flancs rejoignant radialement vers l'extérieur une bande de roulement, sur la circonférence du pneumatique la structure de renfort s'étendant depuis une portion d'extrémité de ladite structure, disposée dans le bourrelet, vers ledit flanc, au moins un agencement de fils principaux suivant un parcours sensiblement circonférentiel étant disposé de façon sensiblement adjacente à ladite portion d'extrémité de façon à former une zone d'ancrage, la disposition des fils desdits agencements étant telle que le nombre de fils principaux disposés du côté axialement interne par rapport à ladite structure est supérieur au nombre de fils principaux disposés du côté axialement externe par rapport à ladite structure, lesdits fils principaux s'étendant sensiblement radialement à l'intérieur de ladite zone d'appui axial.

Les comparaisons sont avantageusement effectuées dans la zone du bourrelet, soit par exemple depuis le siège jusqu'à une zone située au niveau supérieur, ou radialement externe de la portion adaptée au crochet de jante. Les fils situés radialement à l'extérieur de cette portion ne sont pas considérés. Les fils principaux sont avantageusement disposés de façon à ce que leur position radiale ne s'étende pas au-delà de la position radiale la plus extérieure du crochet d'une jante sur laquelle le pneumatique est susceptible d'être monté, de façon à améliorer la contribution des fils principaux à l'endurance de la zone basse.

Une telle disposition permet d'optimiser le comportement mécanique de la zone basse du pneumatique, notamment au niveau du bourrelet. En effet, les contraintes agissant de part et d'autre de la structure de renfort ne sont en général pas symétriques. La présente invention permet de mieux tenir compte de ces conditions. Ainsi par exemple, les fils principaux sont avantageusement plus nombreux dans une zone susceptible de subir d'important efforts en extension à pression nominale et lors du roulage, et avantageusement moins nombreux, voire absents d'une zone susceptible de subir d'importants efforts de compression. Une telle disposition peut contribuer à diminuer la tendance au renversement du bourrelet.

Il a été constaté que les contraintes agissant de part et d'autre de la structure de renfort ne sont pas symétriques. Selon l'invention, le bourrelet est conçu de façon à optimiser le comportement de la zone basse du pneumatique, en fonction de ces différentes contraintes.

En effet, les efforts de compression sont bien supportés et bien répartis dans une zone homogène. Quant aux efforts de tension, ils sont amortis par la présence des fils qui contribuent ainsi à optimiser le comportement mécanique d'une zone fortement sollicitée.

De manière préférentielle, on cherche à contrer l'effet de rotation, afin de favoriser le maintien en place du bourrelet.

Les fils principaux sont les fils qui participent à la fonction d'ancrage de la structure de renfort de type carcasse dans le bourrelet et/ou de serrage du bourrelet, de sorte que sans ces fils, la fonction d'ancrage et/ou de serrage ne saurait être garantie, voire même assurée.

Ainsi, les fils principaux sont avantageusement de type métallique. Les fils principaux ont avantageusement un module élastique élevé. Ces fils principaux sont avantageusement continus. Ces fils comportent de préférence un haut module initial.

Les fils secondaires sont les fils qui ne participent pas de façon substantielle ou déterminante à la fonction d'ancrage de la structure de renfort de type carcasse dans le bourrelet et/ou de serrage du bourrelet, de sorte que sans ces fils, la fonction d'ancrage et/ou de serrage ne saurait être gravement affectée, ou continuerait d'être assurée par les fils principaux.

Ainsi, les fils secondaires sont avantageusement de type textile. Les fils secondaires ont avantageusement un module élastique plus faible que celui des fils principaux.

Selon ce premier aspect de l'invention, les fils secondaires n'entrent pas dans la comparaison des nombres de fils.

Selon une variante avantageuse, tous les agencements de fils principaux sont du côté axialement interne par rapport à ladite structure.

Selon une autre variante avantageuse, le pneumatique comporte également au moins un agencement de fils secondaires disposés axialement extérieurement par rapport à ladite structure de renfort.

Les fils secondaires contribuent à optimiser la rigidité latérale du pneumatique, notamment au-dessus du crochet de jante. Avec la possibilité de moduler les agencements en fonction des caractéristiques spécifiques pour des zones spécifiques. Par exemple, on peut prévoir un alignement de fils secondaires simple sur une portion de la zone basse, double, voire triple, sur une autre portion où on cherche à augmenter la rigidité ou à procurer une protection contre les impacts potentiels pouvant affecter l'intégrité du pneumatique. Par ailleurs, les fils secondaires peuvent être prévus de façon à procurer une protection contre l'usure au niveau de l'interface avec la jante.

Les fils secondaires sont avantageusement non métalliques, et de préférence de type textile.

La structure de renfort de type carcasse est de préférence une structure monofil.

De manière préférentielle, les fils et la portion de structure à proximité immédiate sont noyés dans un mélange caoutchoutique à haut module, soit par exemple un module supérieur à 25 Mpa et de préférence supérieur à 40 Mpa.

Selon une variante avantageuse la structure de renforcement comporte, au niveau des bourrelets, deux portions de structure, avec interposition d'un agencement de fils primaires et/ou secondaires entre les portions voisines.

Selon une autre variante avantageuse, la structure de renforcement comporte, au niveau des bourrelets, trois, ou plus, portions de structure avec interposition d'un agencement de fils primaires et/ou secondaires entre des portions voisines.

On prévoit avantageusement une zone de gomme à haut module entre des portions voisines de la structure.

De manière avantageuse, les fils secondaires sont agencés de façon à être en contact avec au moins un mélange caoutchoutique à haut module. Il est également possible de prévoir que l'agencement soit entouré d'un premier côté par un premier mélange et de l'autre côté par un second mélange.

Selon une variante avantageuse, la zone du bourrelet située axialement intérieurement est constituée au moins partiellement d'un mélange caoutchoutique à haut module. La présence dans cette zone d'un matériau de ce type contribue à assurer un comportement optimal de la zone basse du pneumatique. En effet, un tel matériau procure une meilleure résistance aux efforts en tension.

Selon une variante avantageuse, la zone du bourrelet située axialement extérieurement est constituée au moins partiellement d'un mélange caoutchoutique à bas module. La présence dans cette zone d'un matériau de ce type contribue à assurer un comportement optimal de la zone basse du pneumatique.

Selon un autre aspect de l'invention, il est prévu un pneumatique comportant au moins une structure de renfort ancrée de chaque côté du pneumatique dans un bourrelet dont la base est destinée à être montée sur un siège de jante, chaque bourrelet se prolongeant radialement vers l'extérieur par un flanc et comportant une zone d'appui axial s'étendant sensiblement entre la base du bourrelet et une position radiale de ce bourrelet correspondant sensiblement à la position de la bordure radiale du crochet d'une jante pour laquelle ledit pneumatique est adapté, les flancs rejoignant radialement vers l'extérieur une bande de roulement, sur la circonférence du pneumatique la structure de renfort s'étendant depuis une portion d'extrémité de ladite structure, disposée dans le bourrelet, vers ledit flanc, au moins dans la portion d'extrémité ladite structure étant axialement séparée en au moins deux portions, au moins un agencement de fils principaux suivant un parcours sensiblement circonférentiel étant disposé de façon sensiblement adjacente à au moins une des portions de ladite structure de façon à former une zone d'ancrage, la disposition des fils desdits agencements étant telle que la densité surfacique de fils principaux disposés du côté axialement interne par rapport à ladite structure est supérieure à la densité surfacique de fils principaux disposés du côté axialement externe par rapport à ladite structure, lesdits fils principaux s'étendant sensiblement radialement à l'intérieur de ladite zone d'appui axial.

Dans ce contexte, où la structure de renfort est, au moins au niveau des bourrelets, divisée en plusieurs parties, les agencements éventuels disposés entre des portions de structure ne sont pas pris en compte. On compare seulement les agencements axialement internes et axialement externes à la structure: les portions de structure, avec les éventuels agencements intra-structure, sont considérés comme un tout. On compare donc uniquement les agencements de fils principaux situés de part et d'autres des portions extrêmes de structure.

Selon une variante avantageuse, la structure de renforcement comporte, au niveau du bourrelet, deux portions de structure, avec interposition d'au moins un agencement de fils principaux et/ou secondaires entre les portions voisines.

Selon une autre variante avantageuse, la structure de renforcement comporte, au niveau du bourrelet, trois, ou plus, portions de structure, avec interposition d'au moins un agencement de fils principaux et/ou secondaires entre des portions voisines.

On prévoit avantageusement une zone de gomme à haut module entre des portions voisines de la structure.

Selon une variante avantageuse, tous les agencements de fils principaux sont du côté axialement interne par rapport à ladite structure. Ici encore, cela exclu les éventuels agencements intra-structure.

Selon une autre variante avantageuse, le pneumatique comporte également au moins un agencement de fils secondaires disposés axialement extérieurement par rapport à ladite structure de renfort.

Les fils secondaires sont avantageusement non métalliques, et de préférence de type textile.

Les fils principaux ont avantageusement un module élastique élevé.

De manière avantageuse, au moins une portion des fils principaux et la portion de structure à proximité immédiate de ces fils sont noyés dans un mélange caoutchoutique à haut module, soit par exemple un module supérieur à 25 Mpa et de préférence supérieur à 40 Mpa.

De manière avantageuse, les fils secondaires sont agencés de façon à être en contact avec au moins un mélange caoutchoutique à haut module. Il est également possible de prévoir que l'agencement soit entouré d'un premier côté par un premier mélange et de l'autre côté par un second mélange.

Par fil secondaire, on entend un fil dont le module est inférieur à 20 000 daN/mm² et de préférence inférieur à 15 000 daN/mm². On utilise avantageusement des fils de type textile, tels des fils à base d'aramide, de polyester aromatique, ou encore d'autres types de fils à modules moins élevés tels des fils à base de PET, rayonne, etc.

De préférence, les fils orientés circonférentiellement ne sont pas au contact direct des fils orientés radialement. De manière avantageuse, pour les pneumatiques subissant des sollicitations importantes, afin d'assurer une bonne transmission des efforts entre les portions de fils de la structure de renfort et les fils orientés circonférentiellement, on interpose un caoutchouc à haut module d'élasticité, c'est à dire un mélange de caoutchouc ayant une dureté Shore A supérieure à 70, entre les fils orientés circonférentiellement et l'alignement de fils de carcasse adjacent.

Selon un autre aspect de l'invention, il est prévu un pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, sur la circonférence du pneumatique la structure de renfort s'étendant depuis une portion d'extrémité de ladite structure, disposée dans le bourrelet, vers ledit flanc, au moins un agencement de fils suivant un parcours sensiblement circonférentiel étant disposé de façon sensiblement adjacente à ladite portion d'extrémité, chaque fil disposé du côté axialement interne par rapport à ladite structure présentant un module de Young Eᵢ et une surface Sᵢ et chaque fil disposé du côté axialement externe par rapport à ladite structure présentant un module de Young Eₑ et une surface Sₑ, la disposition des fils desdits agencements étant telle que Σ(EᵢxSᵢ)ᵢₙₜ > Σ(EₑxSₑ)ₑₓₜ.

Selon ce mode de réalisation, la rigidité interne résultante, est supérieure à la rigidité externe résultante.

Il est à noter que dans le cas d'un câble multi-fitaments ou à fils multiples, la section considérée est la section effective. Les espaces libres ou vides entre les fils ne sont pas considérés.

De manière avantageuse, la somme des produits ExS est considérée uniquement dans la zone des bourrelets du pneumatique. Ainsi, si par exemple des fils de protection, souvent de type textiles, se trouvent dans une portion du flanc et/ou du sommet, ces fils ne sont pas considérés dans l'équation.

Selon une variante avantageuse, la valeur de Sₑ est nulle.

Selon une variante avantageuse de l'invention, Σ(EᵢxSᵢ)ᵢₙₜ/ Σ(EₑxSₑ)ₑₓₜ> 1.

Selon une autre variante avantageuse de l'invention, Σ(EᵢxSᵢ)ᵢₙₜ/ Σ(EₑxSₑ)ₑₓₜ > 1.5.

Selon une autre variante avantageuse de l'invention, Σ(EᵢxSᵢ)ᵢₙₜ / Σ(EₑxSₑ)ₑₓₜ > 10.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. Dans les configurations décrites dans la présente demande, la fonction d'ancrage de la structure de renfort de type carcasse est également assurée.

On sait aussi que, toujours dans l'état de la technique, la même tringle assure en outre une fonction de serrage du bourrelet sur sa jante. Dans les configurations décrites dans la présente demande, la fonction de serrage est également assurée, notamment par les enroulements de fils circonférentiels les plus près du siège.

Il va sans dire que l'invention peut être utilisée en adjoignant au bourrelet ou à la zone basse du pneumatique en général d'autres éléments, comme certaines variantes vont l'illustrer. De même, l'invention peut être utilisée en multipliant les structures de renfort de même nature, ou même en adjoignant un autre type de structure de renfort.

Dans le présent mémoire, le terme "fil" désigne en toute généralité aussi bien des monofilaments que des muttifitaments, ou des assemblages comme des câbles, des retors ou bien encore n'importe quel type d'assemblage équivalant, et ceci, quels que soit la matière et le traitement de ces fils, par exemple traitement de surface ou enrobage ou préencollage pour favoriser l'adhésion sur le caoutchouc.

Une structure de renfort ou de renforcement de type carcasse sera dite radiale lorsque ses fils sont disposés à 90°, mais aussi, selon la terminologie en usage, à un angle proche de 90°.

Dans la présente demande le terme fil principal signifie un fil à haut module, soit par exemple 20 000 daN/mm² ou plus. Un tel module peut être atteint par exemple par un fil de type métallique, tel un fil en acier.

Tous les détails de réalisation sont donnés dans la description qui suit, complétée par les figures 1 à 10 où:
la figure 1 est une coupe radiale montrant essentiellement un flanc et un bourrelet d'une première forme d'exécution d'un pneumatique selon l'invention ;
la figure 2 est une coupe radiale montrant essentiellement un flanc et un bourrelet d'une variante de la forme d'exécution de la figure 1;
la figure 3 est une coupe radiale montrant essentiellement un flanc et un bourrelet d'une autre variante de la forme d'exécution de la figure 1;
la figure 4 est une coupe radiale montrant essentiellement un flanc et un bourrelet d'une seconde forme d'exécution d'un pneumatique selon l'invention;
la figure 5 est une coupe radiale montrant essentiellement un flanc et un bourrelet d'une autre forme d'exécution d'un pneumatique selon l'invention;
la figure 6 est une coupe radiale montrant essentiellement un flanc et un bourrelet d'une variante de la forme d'exécution de la figure 5;
la figure 7 est une coupe radiale montrant essentiellement un flanc et un bourrelet d'une variante de l'exemple de la figure 6;
la figure 8 est une coupe radiale montrant essentiellement un flanc et un bourrelet d'une autre variante de l'exemple de la figure 6;
la figure 9 est une coupe radiale montrant essentiellement un flanc et un bourrelet d'une autre variante de l'exemple de la figure 6;
la figure 10 est une coupe radiale montrant essentiellement un flanc et un bourrelet d'une autre variante de l'exemple de la figure 6;
la figure 11 est une coupe radiale montrant essentiellement un flanc et un bourrelet d'une autre forme d'exécution d'un pneumatique selon l'invention;
la figure 12 est une coupe radiale montrant essentiellement un flanc et un bourrelet d'une variante de l'exemple de la figure 11, comportant des fils primaires de différents diamètres;

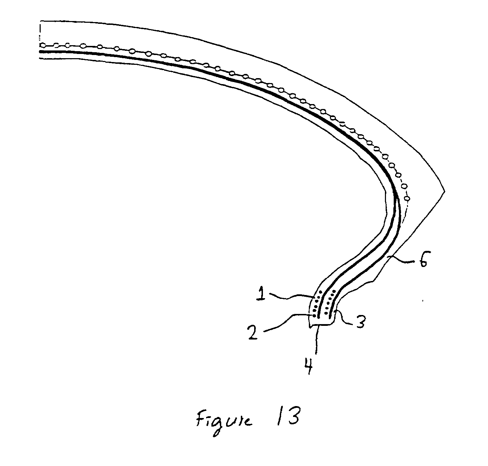

la figure 13 est une coupe radiale montrant essentiellement un demi-pneumatique d'une autre variante de l'exemple de la figure 5.

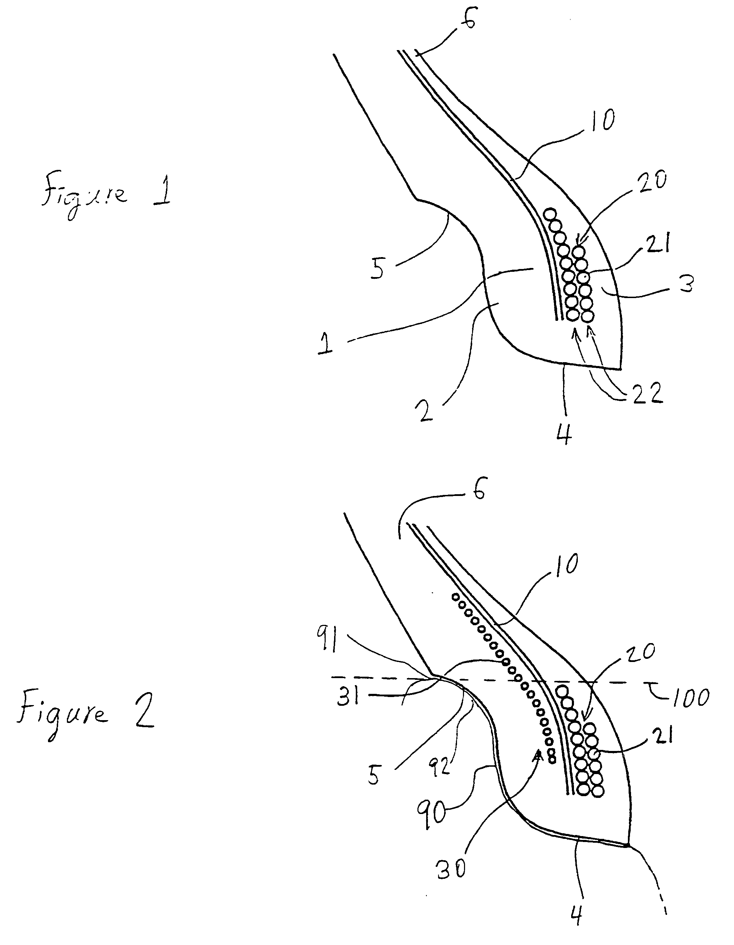

La figure 1 illustre la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion supérieure, ou radialement externe de la portion 2 forme une portion adaptée 5 au crochet de jante. Cette portion est souvent incurvée axialement vers l'extérieur, tel qu'illustré aux figures 1 et 2. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposé directement à leur place finale, sans que le profil du pneumatique doive être modifié lors de la confection.

Des fils circonférentiels 21 agencés de préférence sous forme de piles 22, forment un agencement de fils principaux 20, prévu dans chacun des bourrelets. Ces fils sont de préférence métalliques, et éventuellement laitonnés. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose des fils orientés circonférentiellement. Ceux-ci sont disposés en une pile comme sur les figures, ou en plusieurs piles adjacentes, ou en paquets, ou en toute disposition judicieuse, selon le type de pneumatique et/ou les caractéristiques recherchées.

Les portions d'extrémité radialement internes de la structure de renfort 10 coopèrent avec les bourrelets. Il se crée ainsi un ancrage de ces portions dans lesdits bourrelets de manière à assurer l'intégrité du pneumatique. Afin de favoriser cet ancrage, l'espace entre les fils circonférentiels et la structure de renfort est occupé par un mélange caoutchoutique de liaison. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange à haut module d'élasticité dans la zone d'intersection entre l'arrangement de fils et la structure de renfort. A titre d'exemple non limitatif, le module d'élasticité d'un tel mélange peut atteindre ou même dépasser 25 Mpa, et même dans certains cas atteindre, voire dépasser 40 Mpa.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Selon l'invention, les fils principaux sont prioritairement disposés du côté axialement intérieur du bourrelet. Ainsi, à l'exemple de la figure 1, la portion axialement interne comprend un agencement de fils principaux constitué de 2 piles de fils juxtaposées. Elles sont avantageusement disposées à proximité immédiate de la structure de renfort. La structure illustrée à la figure 1 est particulièrement simplifiée et simple à réaliser. Les efforts de la structure de renfort sont transmis aux enroulements à zéro degré par l'intermédiaire d'un mélange aux caractéristiques adaptées.

Cette forme d'exécution est bien adaptée notamment pour les pneumatiques de type tourisme en général ou encore pour les pneumatiques à indice de vitesse élevé de type tourisme ou deux roues.

La figure 2 illustre une variante de la forme d'exécution de la figure 1 comportant en plus un agencement 30 de fils secondaires 31, de préférence de type textile. Dans cet exemple, l'agencement de fils secondaires est disposé dans la portion axialement externe 2 du bourrelet, le long de la structure de renfort 10. L'agencement peut avantageusement être constituée d'un seul fil enroulé (sensiblement à zéro degré) en spirale, de préférence depuis le plus petit diamètre vers le plus grand diamètre. Une pile peut également être constituée de plusieurs fils concentriques posés l'un dans l'autre. L'agencement 30 de fils secondaires 31 peut se prolonger sensiblement radialement le long du flanc ou d'une portion de celui-ci. Sans sortir du cadre de l'invention, un ou plusieurs agencements de fils secondaires pourraient être prévues dans d'autres zones du pneumatique.

Le nombre d'enroulements, l'écartement radial, et la position radiale de l'agencement peuvent varier selon une infinité de possibilités. Ces caractéristiques sont définies en fonction des qualités recherchées au niveau de la zone basse du pneumatique, telles la rigidité, la résistance à l'usure, l'endurance, etc.

Sur cette même figure, une jante 90 adaptée au pneumatique de façon à permettre le montage de l'ensemble, est également illustrée. Le point 91, le plus radialement extérieur du crochet 92 de cette jante est avantageusement utilisé comme délimitation pour l'emplacement radial limite des fil principaux 21 de la zone d'ancrage. On voit ainsi que les fils principaux 21 sont disposés radialement intérieurement à la ligne correspondante 100.

La figure 3 illustre une autre variante de la forme d'exécution de la figure 1, qui diffère légèrement de celle présentée à la figure 2. Par exemple, l'agencement 30 de fils secondaires 31 s'étend sensiblement radialement depuis la base de la structure de renfort 10. Les agencements 20 de fils principaux 21 sont sensiblement similaires, parallèles et les piles sont de même hauteur.

La figure 4 illustre une seconde forme d'exécution de l'invention dans laquelle des agencements de fils principaux, avantageusement de type câblé ou fil unitaire, sont prévus de part et d'autre de la structure de renfort 10. Toutefois le nombre de fils principaux 21 disposés dans la portion axialement interne 3 est supérieur au nombre de fils principaux 21 disposés dans la portion axialement externe 2.

Dans les différents exemples présentés, la portion axialement interne 3 et la portion axialement externe 2 sont avantageusement délimitées par la structure de type carcasse 10.

De manière avantageuse, le nombre de fils principaux 21 disposés dans la portion axialement interne 3 est au moins 1.5 fois supérieur et de préférence deux ou plus fois supérieur au nombre de fils principaux 21 disposés dans la portion axialement externe 2.

Dans l'exemple illustré à la figure 4, le nombre de fils principaux 21 disposés dans la portion axialement interne 3 est plus de deux fois supérieur au nombre de fils principaux 21 disposés dans la portion axialement externe 2.

Par ailleurs, dans l'exemple de la figure 4, les agencements 20 de fils ainsi que la portion sensiblement adjacente de la structure de renfort 10 sont avantageusement disposés dans une zone de mélange à haut module 40. Une telle zone favorise l'ancrage dans le bourrelet de la structure de renfort. Cet exemple est bien adapté notamment pour un pneumatique pour camionnette ou camion léger, pour lequel on recherche une bonne rigidité en zone basse.

La figure 5 illustre un exemple d'une autre forme d'exécution du pneumatique selon l'invention. Cette forme d'exécution se distingue de la précédente principalement par le fait que la structure de renfort 10 est double au moins au niveau de la zone basse du pneumatique. Une telle configuration implique deux principales familles de pneumatiques, soit celle comportant deux structures de renfort et celle comportant une seule structure de renfort, mais une portion de celle-ci étant dédoublée, par exemple dans la zone basse du pneumatique. Habituellement, mais non obligatoirement, on retrouve la présence d'une ou plusieurs piles de fils principaux ou secondaires entre les portions de structure de renfort 10.

Dans le cadre de la présente invention, lorsque les nombres de fils respectifs de chaque côté de la structure de renfort sont comparés, on considère la structure de renfort comme un tout, de sorte que les éventuelles piles de fils présentes entre des portions de structure de renfort sont assimilées à la structure et ne font donc pas partie de la comparaison des nombres de fils.

Dans l'exemple de la figure 5, le nombre de fils principaux 21 disposés dans la portion axialement interne 3 est supérieur au nombre de fils principaux 21 disposés dans la portion axialement externe 2. En effet, il y a dans la portion interne une pile de sept fils, tandis qu'il n'y a aucun fil dans la portion externe 2.

La figure 6 propose une variante de la forme d'exécution de la figure 5, comportant un agencement 30 de fils secondaires 31 disposé dans la portion externe 2 du bourrelet et s'étendant même radialement extérieurement au-delà du bourrelet. Cet agencement contribue à la rigidité transversale du pneumatique. Les fils sont avantageusement en aramide, hybride, PET, ou PEN. A titre de variante, une partie ou la totalité des fils principaux disposés entre les portions de structure de renfort pourrait être remplacés par des fils secondaires, par exemple de nature textile. Cet exemple est bien adapté notamment pour les pneumatiques de type tourisme, camionnette ou camion léger et deux roues.

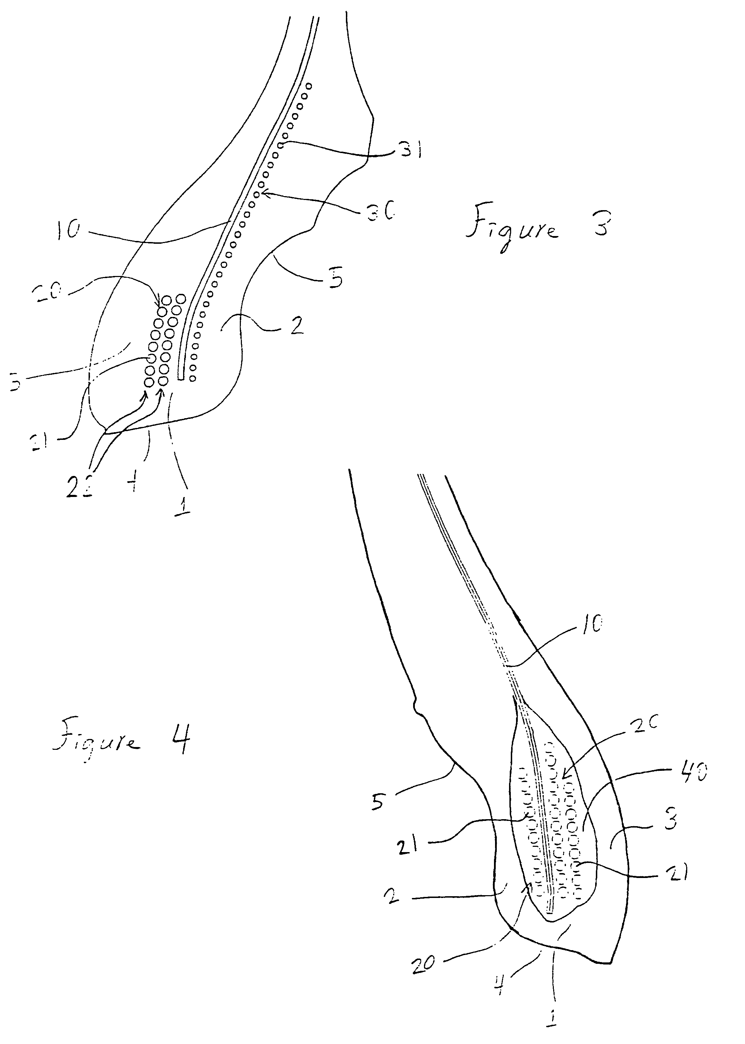

Les figures 7 et 8 illustrent des variantes de l'exemple de la figure 6 comportant par exemple (figure 7) une seule pile de fils principaux entre les deux portions de structure, ou encore un agencement de fils secondaires comportant deux piles côte à côte (figure 8). Les agencements de fils secondaires, de préférence de type textile, procurent une plus grande rigidité latérale et longitudinale. Les piles de fils de ces agencements s'étendent sensiblement radialement depuis le bourrelet vers le flanc, au-delà du crochet de jante 5.

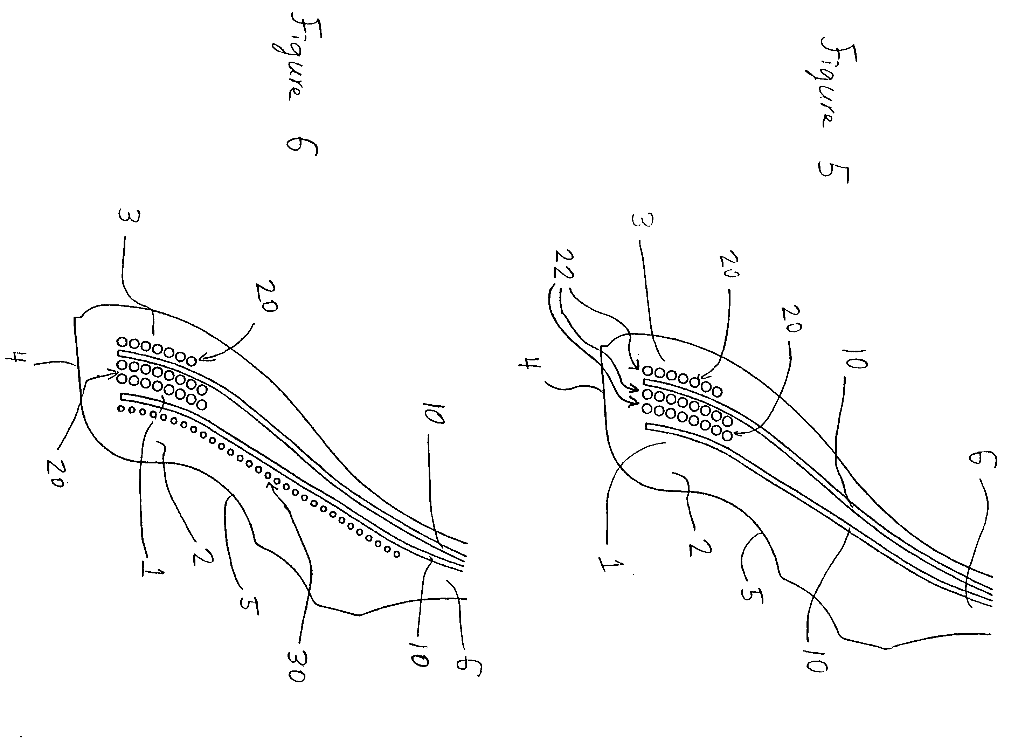

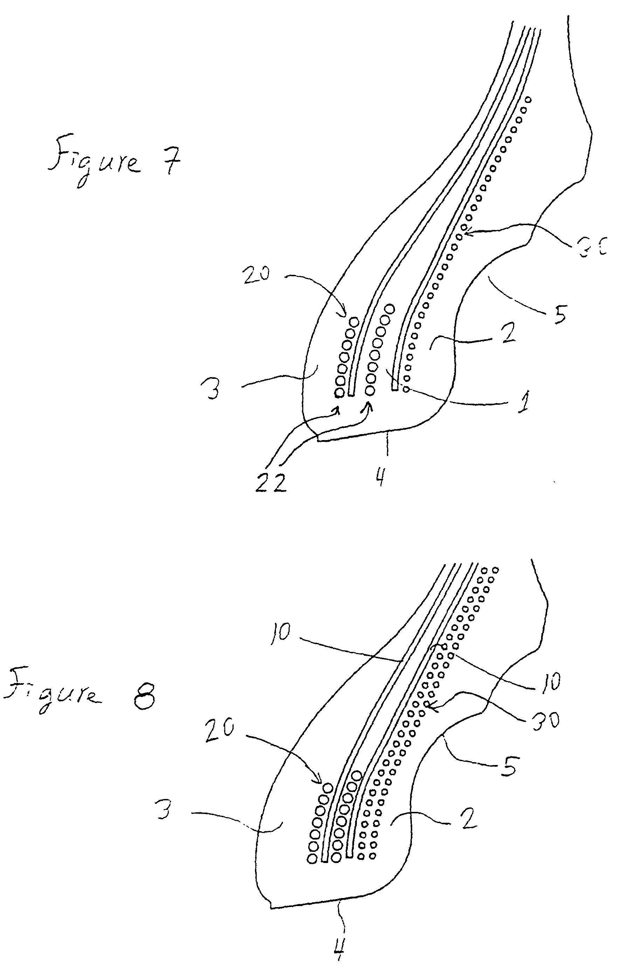

Les figures 9 et 10 illustrent d'autres variantes de l'exemple de la figure 6. La variante de la figure 9 comporte une zone de mélange caoutchoutique à haut module 40 disposée sur une au moins une portion du parcours des deux portions de structure de renfort 10, entre ces deux portions. Dans l'exemple illustré, la zone en question ne couvre pas les piles de fils disposées entre les portions de structures. Selon une autre variante non illustrée, la zone couvre également ces piles de fils. La présence de cette zone haut module contribue à augmenter la rigidité de la zone basse du pneumatique.

Ce mélange 40 est avantageusement disposé de façon à être en contact direct avec les portions adjacentes de la structure de renfort 10. Dans les configurations traditionnelles, une nappe carcasse (fil imprégné dans une couche de mélange caoutchoutique) est appliquée. Il en résulte donc une mince couche intermédiaire de mélange à plus faible module qui se trouve entre le mélange à haut module et la portion de structure de renfort. Avec le contact direct, donc sans la présence de cette couche mince de mélange à plus faible module, l'impact de la présence du mélange à haut module dans la zone est amplifié. En effet, la traditionnelle couche mince à plus faible module engendre des pertes d'énergies, qui peuvent occasionner une détérioration des propriétés mécaniques.

En modifiant l'épaisseur de la zone 40 et/ou en utilisant un mélange avec un module plus ou moins élevé, on peut obtenir un pneumatique avec la rigidité souhaitée, adaptée pour l'usage prévu. Cet exemple est bien adapté pour des pneumatiques de type tourisme, camionnette ou camion léger, et deux roues.

La figure 10 illustre une variante où l'agencement 30 de fils secondaires 31 est disposé dans une zone comportant différentes sous-zones ayant chacune des propriétés mécaniques distinctes, notamment des modules d'élasticité différents.

Par exemple, la zone 40 est à haut module (comme par exemple supérieur à 12 Mpa), la zone 60 à très haut module (comme par exemple supérieur ou égal à 25 Mpa), et la zone 50 est à plus faible module (comme par exemple inférieur ou égal à 12 Mpa).

En affinant de la sorte la répartition des zones, on peut optimiser les caractéristiques du bourrelet en prenant bien en compte les exigences différentes pour chacune des zones, par exemple dureté et rigidité maximales à la base du bourrelet, puis plus grande souplesse à partir du crochet de jante.

A partir de ces quelques exemples, d'autres agencements peuvent être proposés, par exempte, une variante présentant simultanément les zones à haut module des figures 9 et 10.

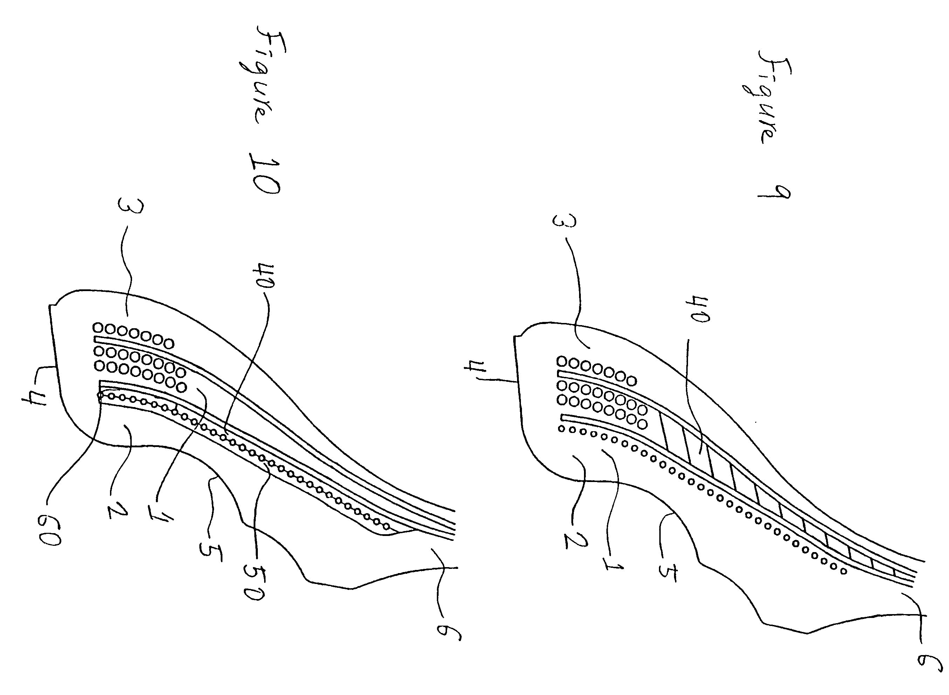

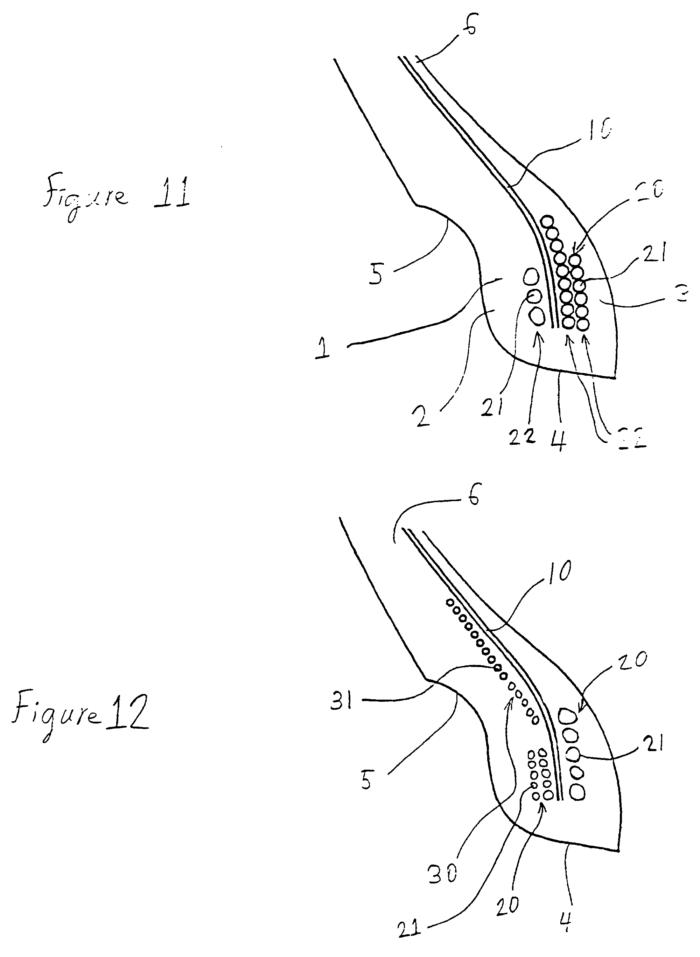

Les figures 11 et 12 illustrent des exemples d'une autre forme d'exécution d'un pneumatique selon l'invention. Dans cette forme d'exécution, de part et d'autre de la structure de renfort se trouvent des agencements 20 de fils principaux 21 de diamètres différents. Selon l'invention la disposition des fils desdits agencements est telle que la densité surfacique de fils principaux 21 disposés du côté axialement interne 3 par rapport à ladite structure 10 est supérieure à la densité surfacique de fils principaux 21 disposés du côté axialement externe 2 par rapport à ladite structure. Dans l'exemple de la figure 12, ce dernier critère est respecté même si le nombre de fils principaux 21 du côté axialement interne 3 est inférieur au nombre de fils principaux 21 du côté axialement externe 2. Selon un exemple avantageux, la densité surfacique correspond à la somme des surfaces des profils filaires (des fils ou filaments ou câbles ou retords coupés). Par exemple, un nombre restreint de fils de diamètre important peut occuper une surface plus importante qu'un plus grand nombre de fils ou câbles ou filaments ou retords, etc, de diamètres en général plus petits. La somme des surfaces importe : il peut s'agir d'une somme de surfaces identiques ou non identiques.

Dans les différents exemples décrits et illustrés, on retrouve au moins un agencement de fils suivant un parcours sensiblement circonférentiel disposé de façon sensiblement adjacente à la structure de renfort, la disposition des fils desdits agencements étant telle que Σ(EᵢxSᵢ)ᵢₙₜ > Σ(EₑxSₑ)ₑₓₜ, où Eᵢ et Sᵢ représentent respectivement le module de Young et la surface de chaque fil disposé du côté axialement interne par rapport à ladite structure, et où Eₑ et Sₑ représentent respectivement le module de Young et la surface de chaque fil disposé du côté axialement externe par rapport à ladite structure de renfort. La somme des produits des modules et des surfaces effectives de chacun des fils de chaque côté de la structure de renfort constitue un paramètre de mesure et de comparaison fiable et précis. De manière avantageuse, cette formulation permet en outre de prendre en compte dans la comparaison tout type de fil ou filament ou câble. On procède de préférence à la comparaison à partir des fils disposés dans la zone du bourrelet ou dans la zone d'ancrage de la structure de renfort dans le bourrelet.

## Revendications

1. Pneumatique comportant au moins une structure de renfort (10) ancrée de chaque côté du pneumatique dans un bourrelet (4) dont la base est destinée à être montée sur un siège de jante, chaque bourrelet (4) se prolongeant radialement vers l'extérieur par un flanc (6) et comportant une zone d'appui axial s'étendant sensiblement entre la base du bourrelet et une position radiale de ce bourrelet correspondant sensiblement à la position de la bordure radiale du crochet d'une jante pour laquelle ledit pneumatique est adapté, les flancs (6) rejoignant radialement vers l'extérieur une bande de roulement, sur la circonférence du pneumatique la structure de renfort (10) s'étendant depuis une portion d'extrémité de ladite structure, disposée dans le bourrelet, vers ledit flanc, au moins un agencement de fils principaux (20) suivant un parcours sensiblement circonférentiel étant disposé de façon sensiblement adjacente à ladite portion d'extrémité de façon à former une zone d'ancrage, **caractérisé en ce que** la disposition des fils (21) desdits agencements est telle que le nombre de fils principaux (20) disposés du côté axialement interne par rapport à ladite structure est supérieur au nombre de fils principaux (20) disposés du côté axialement externe par rapport à ladite structure, lesdits fils principaux (20) s'étendant sensiblement radialement à l'intérieur de ladite zone d'appui axial.

2. Pneumatique selon la revendication 1, dans lequel le nombre de fils principaux (21) disposés dans la portion axialement interne (3) est au moins 1.5 fois supérieur au nombre de fils principaux (21) disposés dans la portion axialement externe (2).

3. Pneumatique selon la revendication 1, dans lequel tous les agencements de fils principaux (20) sont du côté axialement interne par rapport à ladite structure (10).

4. Pneumatique selon l'une des revendications 1 à 3, comportant également au moins un agencement (30) de fils secondaires (31) disposés axialement extérieurement par rapport à ladite structure de renfort.

5. Pneumatique selon la revendication 4, dans lequel les fils secondaires (30) sont non métalliques.

6. Pneumatique selon l'une des revendications précédentes, dans lequel les fils principaux (20) ont un module élastique élevé.

7. Pneumatique selon l'une des revendications précédentes, dans lequel au moins une partie des fils principaux (20) et la portion de structure à proximité immédiate de ces fils sont noyés dans un mélange de gomme dont le module est supérieur à 25 Mpa.

8. Pneumatique selon l'une des revendications 1 à 7, dans lequel la structure de renforcement (10) comporte, au niveau du bourrelet, au moins deux portions de structure, avec interposition d'un agencement entre au moins deux des portions voisines.

9. Pneumatique selon l'une des revendications 4 ou 5, dans lequel les agencements de fils secondaires (31) sont disposés de façon à être en contact avec au moins un mélange de gomme à haut module.

10. Pneumatique selon l'une des revendications précédentes, dans lequel les agencements (20) sont entourés d'un premier côté par un premier mélange et de l'autre côté par un second mélange, différent du premier mélange.

11. Pneumatique selon l'une des revendications précédentes, dans lequel ladite portion d'extrémité comporte un profil méridien sensiblement radial.

12. Pneumatique comportant au moins une structure (10) de renfort ancrée de chaque côté du pneumatique dans un bourrelet (4) dont la base est destinée à être montée sur un siège de jante, chaque bourrelet (4) se prolongeant radialement vers l'extérieur par un flanc (6) et comportant une zone d'appui axial s'étendant sensiblement entre la base du bourrelet et une position radiale de ce bourrelet correspondant sensiblement à la position de la bordure radiale du crochet d'une jante pour laquelle ledit pneumatique est adapté, les francs (6) rejoignant radialement vers l'extérieur une bande de roulement, sur la circonférence du pneumatique la structure de renfort s'étendant depuis une portion d'extrémité de ladite structure, disposée dans le bourrelet (4), vers ledit flanc (6), au moins dans la portion d'extrémité ladite structure étant axialement séparée en au moins deux portions, au moins un agencement de fils principaux (20) suivant un parcours sensiblement circonférentiel étant disposé de façon sensiblement adjacente à au moins une des portions de ladite structure de façon à former une zone d'ancrage, **caractérisé en ce que** la disposition des fils (21) desdits agencements est telle que la densité surfacique de fils principaux (20) disposés du côté axialement interne par rapport à ladite structure est supérieure à la densité surfacique de fils principaux disposés du côté axialement externe par rapport à ladite structure, lesdits fils principaux (20) s'étendant sensiblement radialement à l'intérieur de ladite zone d'appui axial.

13. Pneumatique selon la revendication 12, dans lequel tous les agencements de fils principaux (20) sont du côté axialement interne par rapport à ladite structure.

14. Pneumatique selon l'une des revendications 12 ou 13, comportant également au moins un agencement de fils secondaires (31) disposés axialement extérieurement par rapport à ladite structure de renfort.

15. Pneumatique selon la revendication 14, dans lequel les fils secondaires (31) sont non métalliques.

16. Pneumatique selon l'une des revendications 12 à 15, dans lequel les fils principaux (20) ont un module élastique élevé.

17. Pneumatique selon l'une des revendications 12 à 16, dans lequel au moins une partie des fils principaux (20) et la portion de structure à proximité immédiate de ces fils sont noyés dans un mélange de gomme dont le module est supérieur à 25 Mpa.

18. Pneumatique selon l'une des revendications 12 à 17, dans lequel la structure de renforcement comporte, au niveau du bourrelet, au moins deux portions de structure axialement espacées, avec interposition d'un agencement entre au moins deux des portions voisines.

19. Pneumatique selon l'une des revendications 14 ou 15, dans lequel les agencements de fils secondaires (31) sont disposés de façon à être en contact avec au moins un mélange de gomme à haut module.

20. Pneumatique selon l'une des revendications 12 à 19, dans lequel les agencements sont entourés d'un premier côté par un premier mélange et de l'autre côté par un second mélange, différent du premier mélange.

21. Pneumatique selon l'une des revendications 12 à 20, dans lequel ladite portion d'extrémité comporte un profil méridien sensiblement radial.

22. Pneumatique comportant au moins une structure de renfort de type carcasse (10) ancrée de chaque côté du pneumatique dans un bourrelet (4) dont la base est destinée à être montée sur un siège de jante, chaque bourrelet (4) se prolongeant radialement vers l'extérieur par un flanc (6), et comportant une zone d'appui axial s'étendant sensiblement entre la base du bourrelet (4) et une position radiale de ce bourrelet correspondant sensiblement à la position de la bordure radiale du crochet d'une jante pour laquelle ledit pneumatique est adapté, les flancs (6) rejoignant radialement vers l'extérieur une bande de roulement, sur la circonférence du pneumatique la structure de renfort s'étendant depuis une portion d'extrémité de ladite structure, disposée dans le bourrelet, vers ledit flanc, au moins un agencement de fils principaux (20) suivant un parcours sensiblement circonférentiel étant disposé de façon sensiblement adjacente à ladite portion d'extrémité, chaque fil disposé du côté axialement interne par rapport à ladite structure présentant un module de Young Eᵢ et une surface Sᵢ et chaque fil disposé du côté axialement externe par rapport à ladite structure présentant un module de Young Eₑ et une surface Sₑ, **caractérisé en ce que** la disposition des fils desdits agencements est telle que Σ(EᵢxSᵢ)ᵢₙₜ>Σ(EₑXSₑ)_{ext,}, lesdits fils principaux (20) s'étendant sensiblement radialement à l'intérieur de ladite zone d'appui axial.

23. Pneumatique selon la revendication 22, dans lequel Σ(EᵢxSᵢ)ᵢₙₜ/ Σ(EₑxSₑ)_{ext,}>1.5.

24. Pneumatique selon l'une des revendications 22 ou 23, dans lequel la somme des produits ExS est considérée uniquement dans la zone des bourrelets (4) du pneumatique.

25. Pneumatique selon l'une des revendications 22 à 24, dans quel la valeur de Sₑ est sensiblement nulle.

26. Pneumatique selon l'une des revendications 22 à 25, dans lequel tous les agencements de fils principaux (25) sont du côté axialement interne par rapport à ladite structure.

27. Pneumatique selon l'une des revendications 22 à 26, comportant également au moins un agencement de fils secondaires (31) disposés axialement extérieurement par rapport à ladite structure de renfort.

28. Pneumatique selon la revendication 27, dans lequel les fils secondaires (31) sont non métalliques.

29. Pneumatique selon l'une des revendications 22 à 28, dans lequel les fils principaux (20) ont un module élastique élevé.

30. Pneumatique selon l'une des revendications 22 à 29, dans lequel au moins une partie des fils principaux (20) et la portion de structure à proximité immédiate de ces fils sont noyés dans un mélange de gomme dont le module est supérieur à 25 Mpa.

31. Pneumatique selon l'une des revendications 22 à 30, dans lequel la structure de renforcement comporte, au niveau du bourrelet (4), au moins deux portions de structure axialement espacées, avec interposition d'un agencement entre au moins deux des portions voisines.

32. Pneumatique selon l'une des revendications 22 à 31, dans lequel les agencements sont entourés d'un premier côté par un premier mélange et de l'autre côté par un second mélange, différent du premier mélange.

33. Pneumatique selon l'une des revendications 22 à 32, dans lequel ladite portion d'extrémité comporte un profil méridien sensiblement radial.

## Patentansprüche

1. Luftreifen, der mindestens eine Verstärkungskonstruktion (10) aufweist, die auf jeder Seite des Luftreifens in einem Wulst (4) verankert ist, dessen Basis dazu vorgesehen ist, auf einen Felgensitz montiert zu werden, wobei sich jeder Wulst (4) radial nach außen in einer Flanke (6) fortsetzt und eine axiale Auflagezone besitzt, die sich in etwa von der Basis des Wulstes bis zu einer radialen Position des Wulstes erstreckt, die in etwa der radialen Position des Randes des Horns der Felge entspricht, für die der Luftreifen geeignet ist, die Flanken (6) radial nach außen in einen Laufstreifen übergehen, sich am Umfang des Reifens die Verstärkungskonstruktion (10) von einem Endbereich der Konstruktion, die im Wulst angeordnet ist, bis zur Flanke erstreckt und mindestens eine Anordnung von Hauptdrähten (20) in etwa angrenzend an diesen Endbereich in etwa in Umfangsrichtung verläuft, sodass eine Verankerungszone gebildet wird, **dadurch gekennzeichnet, dass** das Anbringen der Drähte (21) dieser Anordnungen so erfolgt, dass die Anzahl der Hauptdrähte (20), die in Bezug auf die Konstruktion auf der axial inneren Seite angeordnet sind, größer ist als die Anzahl der Hauptdrähte (20), die in Bezug auf die Konstruktion auf der axial äußeren Seite angeordnet sind, wobei sich die Hauptdrähte (20) in etwa radial in die axiale Auflagezone erstrecken.

2. Luftreifen nach Anspruch 1, wobei die Anzahl der Hauptdrähte (21), die in dem axial inneren Bereich (3) angeordnet sind, mindestens das 1,5-fache der Anzahl der Hauptdrähte (21) beträgt, die sich in dem axial äußeren Bereich (2) befinden.

3. Luftreifen nach Anspruch 1, wobei sich alle Anordnungen von Hauptdrähten (20) in Bezug auf die Konstruktion (10) auf der axial inneren Seite befinden.

4. Luftreifen nach einem der Ansprüche 1 bis 3, der ferner mindestens eine Anordnung (30) von sekundären Drähten (31) aufweist, die in Bezug auf die Verstärkungskonstruktion axial außen angeordnet sind.

5. Luftreifen nach Anspruch 4, wobei die sekundären Drähte (30) keine Metalldrähte sind.

6. Luftreifen nach einem der vorhergehenden Ansprüche, wobei die Hauptdrähte (20) einen hohen Elastizitätsmodul aufweisen.

7. Luftreifen nach einem der vorhergehenden Ansprüche, wobei zumindest ein Teil der Hauptdrähte (20) und der Bereich der Konstruktion in der unmittelbaren Nähe der Drähte in eine Kautschukmischung eingebettet sind, deren Modul über 25 MPa liegt.

8. Luftreifen nach einem der Ansprüche 1 bis 7, wobei die Verstärkungskonstruktion (10) auf Höhe des Wulstes mindestens zwei Konstruktionsteile umfasst, wobei eine Anordnung zwischen mindestens zwei benachbarten Teilen angeordnet ist.

9. Luftreifen nach einem der Ansprüche 4 oder 5, wobei die Anordnungen von sekundären Drähten (31) so angebracht sind, dass sie mit mindestens einer Gummimischung mit hohem Modul in Kontakt sind.

10. Luftreifen nach einem der vorhergehenden Ansprüche, wobei die Anordnungen (20) auf einer Seite von einer ersten Mischung und auf der anderen Seite von einer zweiten Mischung umgeben sind, die von der ersten Mischung verschieden ist.

11. Luftreifen nach einem der vorhergehenden Ansprüche, wobei der Endbereich ein im Wesentlichen radiales Meridianprofil aufweist.

12. Luftreifen, der mindestens eine Verstärkungskonstruktion (10) aufweist, die auf jeder Seite des Luftreifens in einem Wulst (4) verankert ist, dessen Basis dazu vorgesehen ist, auf einen Felgensitz montiert zu werden, wobei sich jeder Wulst (4) radial nach außen in einer Flanke (6) fortsetzt und eine axiale Auflagezone besitzt, die sich in etwa von der Basis des Wulstes zu einer radialen Position des Wulstes erstreckt, die in etwa der radialen Position des Randes des Horns der Felge entspricht, für die der Luftreifen geeignet ist, die Flanken (6) radial nach außen in einen Laufstreifen übergehen, sich am Umfang des Reifens die Verstärkungskonstruktion (10) von einem Endbereich der Konstruktion, die im Wulst angeordnet ist, zur Flanke erstreckt, mindestens eine Anordnung von Hauptdrähten (20) in etwa angrenzend an diesen Endbereich in etwa in Umfangsrichtung verläuft, sodass eine Verankerungszone gebildet wird, **dadurch gekennzeichnet, dass** das Anbringen der Drähte (21) der Anordnungen so erfolgt, dass die Oberflächendichte der Hauptdrähte (20), die in Bezug auf die Konstruktion auf der axial inneren Seite angeordnet sind, über der Oberflächendichte der Hauptdrähte liegt, die sich in Bezug auf die Konstruktion auf der axial äußeren Seite befinden, wobei sich die Hauptdrähte (20) in etwa radial in die axiale Auflagezone erstrecken.

13. Luftreifen nach Anspruch 12, bei dem sich alle Anordnungen von Hauptdrähten (20) in Bezug auf die Konstruktion auf der axial inneren Seite befinden.

14. Luftreifen nach einem der Ansprüche 12 oder 13, der ferner mindestens eine Anordnung von sekundären Drähten (31) aufweist, die in Bezug auf die Verstärkungskonstruktion axial außen angeordnet sind.

15. Luftreifen nach Anspruch 14, wobei die sekundären Drähte (31) keine Metalldrähte sind.

16. Luftreifen nach einem der Ansprüche 12 bis 15, wobei die Hauptdrähte (20) einen hohen Elastizitätsmodul aufweisen.

17. Luftreifen nach einem der Ansprüche 12 bis 16, wobei mindestens ein Teil der Hauptdrähte (20) und der Bereich der Konstruktion in unmittelbarer Nähe der Drähte in eine Gummimischung eingebettet sind, deren Modul über 25 MPa liegt.

18. Luftreifen nach einem der Ansprüche 12 bis 17, wobei die Verstärkungskonstruktion auf der Höhe des Wulstes mindestens zwei Konstruktionsteile aufweist, die axial beabstandet sind, wobei eine Anordnung zwischen mindestens zwei benachbarten Teilen angebracht ist.

19. Luftreifen nach einem der Ansprüche 14 oder 15, wobei die Anordnungen der sekundären Drähte (31) so angebracht sind, dass sie mit mindestens einer Kautschukmischung mit hohem Modul in Kontakt sind.

20. Luftreifen nach einem der Ansprüche 12 bis 19, wobei die Anordnungen auf einer Seite von einer ersten Mischung und auf der anderen Seite von einer zweiten Mischung umgeben sind, die von der ersten Mischung verschieden ist.

21. Luftreifen nach einem der Ansprüche 12 bis 20, wobei der Endbereich ein im Wesentlichen radiales Meridianprofil aufweist.

22. Luftreifen, der mindestens eine Verstärkungskonstruktion (10) aufweist, die auf jeder Seite des Luftreifens in einem Wulst (4) verankert ist, dessen Basis dazu vorgesehen ist, auf einen Felgensitz montiert zu werden, wobei sich jeder Wulst (4) radial nach außen in einer Flanke (6) fortsetzt und eine axiale Auflagezone besitzt, die sich in etwa von der Basis des Wulstes zu einer radialen Position des Wulstes erstreckt, die in etwa der radialen Position des Randes des Horns der Felge entspricht, für die der Luftreifen geeignet ist, die Flanken (6) radial nach außen in einen Laufstreifen übergehen, sich am Umfang des Reifens die Verstärkungskonstruktion (10) von einem Endbereich der Konstruktion, die im Wulst angeordnet ist, zur Flanke erstreckt, mindestens eine Anordnung von Hauptdrähten (20) in etwa angrenzend an diesen Endbereich ungefähr in Umfangsrichtung verläuft, sodass eine Verankerungszone gebildet wird, wobei jeder in Bezug auf die Konstruktion auf der axial inneren Seite angeordnete Draht einen Young-Modul Eᵢ und eine Oberfläche Sᵢ aufweist und jeder in Bezug auf die Konstruktion auf der axial äußeren Seite angeordnete Draht einen Young-Modul Eₑ und eine Oberfläche Sₑ aufweist, **dadurch gekennzeichnet, dass** das Anbringen der Drähte dieser Anordnungen so erfolgt, dass Σ(EᵢxSᵢ)ᵢₙₜ > Σ(EₑxSₑ)ₑₓₜ, wobei sich die Hauptdrähte (20) in etwa radial in die axiale Auflagefläche erstrecken.

23. Luftreifen nach Anspruch 22, wobei gilt: Σ(EᵢxSᵢ)ᵢₙₜ/Σ(EₑxSₑ)ₑₓₜ > 1,5.

24. Luftreifen nach einem der Ansprüche 22 oder 23, wobei die Summe der Produkte ExS lediglich im Bereich der Wülste (4) des Luftreifens berücksichtigt wird.

25. Luftreifen nach einem der Ansprüche 22 bis 24, bei dem der Wert von Sₑ ungefähr Null ist.

26. Luftreifen nach einem der Ansprüche 22 bis 25, wobei sich alle Anordnungen von Hauptdrähten (25) in Bezug auf die Konstruktion auf der axial inneren Seite befinden.

27. Luftreifen nach einem der Ansprüche 22 bis 26, die ferner mindestens eine Anordnung von sekundären Drähten (31) aufweist, die in Bezug auf die Verstärkungskonstruktion axial außen angeordnet sind.

28. Luftreifen nach Anspruch 27, wobei die sekundären Drähte (31) keine Metalldrähte sind.

29. Luftreifen nach einem der Ansprüche 22 bis 28, wobei die Hauptdrähte (20) einen hohen Elastizitätsmodul aufweisen.

30. Luftreifen nach einem der Ansprüche 22 bis 29, wobei mindestens ein Teil der Hauptdrähte (20) und der Bereich der Konstruktion in unmittelbarer Nähe der Drähte in eine Kautschukmischung eingebettet sind, deren Modul über 25 MPa liegt.

31. Luftreifen nach einem der Ansprüche 22 bis 30, wobei die Verstärkungskonstruktion auf Höhe des Wulstes (4) mindestens zwei Konstruktionsteile aufweist, die axial beabstandet sind, wobei eine Anordnung zwischen mindestens zwei benachbarten Teilen angebracht ist.

32. Luftreifen nach einem der Ansprüche 22 bis 31, wobei die Anordnungen auf einer Seite von einer ersten Mischung und auf der anderen Seite von einer zweiten Mischung umgeben sind, die von der ersten Mischung verschieden ist.

33. Luftreifen nach einem der Ansprüche 22 bis 32, wobei der Endbereich ein in etwa radiales Meridianprofil aufweist.

## Claims

1. A tyre comprising at least one reinforcement structure (10) anchored on either side of the tyre in a bead (4), the base of which is intended to be mounted on a rim seat, each bead (4) being extended radially towards the outside by a sidewall (6) and comprising an axial bearing zone extending substantially between the base of the bead and a radial position of this bead substantially corresponding to the position of the radial edge of the hook of a rim for which said tyre is adapted, the sidewalls (6) radially towards the outside joining a tread, on the circumference of the tyre the reinforcement structure (10) extending from an end portion of said structure, arranged in the bead, towards said sidewall, at least one arrangement of main cords (20) along a substantially circumferential path being arranged substantially adjacent to said end portion so as to form an anchoring zone, **characterised in that** the layout of the cords (21) of said arrangements is such that the number of main cords (20) arranged on the axially inner side relative to said structure is greater than the number of main cords (20) arranged on the axially outer side relative to said structure, said main cords (20) extending substantially radially to the inside of said axial bearing zone.

2. A tyre according to Claim 1, in which the number of main cords (21) arranged in the axially inner portion (3) is at least 1.5 times greater than the number of main cords (21) arranged in the axiaiiy outer portion (2).

3. A tyre according to Claim 1, in which all the arrangements of main cords (20) are on the axially inner side relative to said structure (10).

4. A tyre according to one of Claims 1 to 3, also comprising at least one arrangement (30) of secondary cords (31) which are arranged axially to the outside relative to said reinforcement structure.

5. A tyre according to Claim 4, in which the secondary cords (30) are non-metallic.

6. A tyre according to one of the preceding claims, in which the main cords (20) have a high elasticity modulus.

7. A tyre according to one of the preceding claims, in which at least one portion of the main cords (20) and the structure portion in the immediate vicinity of these cords are embedded in a rubber mix of a modulus greater than 25 MPa.

8. A tyre according to one of Claims 1 to 7, in which the reinforcement structure (10) comprises, at the level of the bead, at least two structure portions, with interposition of an arrangement between at least two of the adjacent portions.

9. A tyre according to one of Claims 4 or 5, in which the arrangements of secondary cords (31) are arranged so as to be in contact with at least one rubber mix of high modulus.

10. A tyre according to one of the preceding claims, in which the arrangements (20) are surrounded on a first side by a first mix and on the other side by a second mix which is different from the first mix.

11. A tyre according to one of the preceding claims, in which said end portion comprises a substantially radial meridian profiie.

12. A tyre comprising at least one reinforcement structure (10) anchored on either side of the tyre in a bead (4), the base of which is intended to be mounted on a rim seat, each bead (4) being extended radially towards the outside by a sidewall (6) and comprising an axial bearing zone extending substantially between the base of the bead and a radial position of this bead substantially corresponding to the position of the radial edge of the hook of a rim for which said tyre is adapted, the sidewalls (6) radially towards the outside joining a tread, on the circumference of the tyre the reinforcement structure extending from an end portion of said structure, arranged in the bead (4), towards said sidewall (6), at least in the end portion said structure being axially separated into at least two portions, at least one arrangement of main cords (20) along a substantially circumferential path being arranged substantially adjacent to at least one of the portions of said structure so as to form an anchoring zone, **characterised in that** the layout of the cords (21) of said arrangements is such that the surface density of main cords (20) arranged on the axially inner side relative to said structure is greater than the surface density of main cords arranged on the axially outer side relative to said structure, said main cords (20) extending substantially radially to the inside of said zone of axial bearing.

13. A tyre according to Claim 12, in which all the arrangements of main cords (20) are on the axially inner side relative to said structure.

14. A tyre according to one of Claims 12 or 13, also comprising at least one arrangement of secondary cords (31) which are arranged axially to the outside relative to said reinforcement structure.

15. A tyre according to Claim 14, in which the secondary cords (31) are non-metallic.

16. A tyre according to one of Claims 12 to 15, in which the main cords (20) have a high elasticity modulus.

17. A tyre according to one of Claims 12 to 16, in which at least one portion of the main cords (20) and the structure portion in the immediate vicinity of these cords are embedded in a rubber mix of a modulus greater than 25 MPa.

18. A tyre according to one of Claims 12 to 17, in which the reinforcement structure comprises, at the level of the bead, at least two axially spaced structure portions, with interposition of an arrangement between at least two of the adjacent portions.

19. A tyre according to one of Claims 14 or 15, in which the arrangements of secondary cords (31) are arranged so as to be in contact with at least one rubber mix of high modulus.

20. A tyre according to one of Claims 12 to 19, in which the arrangements are surrounded on a first side by a first mix and on the other side by a second mix which is different from the first mix.

21. A tyre according to one of Claims 12 to 20, in which said end portion comprises a substantially radial meridian profile.

22. A tyre comprising at least one reinforcement structure (10) of the carcass type anchored on either side of the tyre in a bead (4), the base of which is intended to be mounted on a rim seat, each bead (4) being extended radially towards the outside by a sidewall (6), and comprising an axial bearing zone extending substantially between the base of the bead (4) and a radial position of this bead substantially corresponding to the position of the radial edge of the hook of a rim for which said tyre is adapted, the sidewalls (6) radially towards the outside joining a tread, on the circumference of the tyre the reinforcement structure extending from an end portion of said structure, arranged in the bead, towards said sidewall, at least one arrangement of main cords (20) along a substantially circumferential path being arranged substantially adjacent to said end portion, each cord arranged on the axially inner side relative to said structure having a Young's modulus Eᵢ and a surface Sᵢ and each cord arranged on the axially outer side relative to said structure having a Young's modulus Eₑ and a surface Sₑ, **characterised in that** the layout of the cords of said arrangements is such that Σ(EᵢxSᵢ)ᵢₙₜ > Σ(EₑxSₑ)ₑₓₜ, said main cords (20) extending substantially radially within said axial bearing zone.

23. A tyre according to Claim 22, in which Σ(EᵢxSᵢ)ᵢₙₜ/Σ(EₑxSₑ)ₑₓₜ > 1.5.

24. A tyre according to one of Claims 22 or 23, in which the total of the products ExS is considered solely in the zone of the beads (4) of the tyre.

25. A tyre according to one of Claims 22 to 24, in which the value of Sₑ is substantially zero.

26. A tyre according to one of Claims 22 to 25, in which all the arrangements of main cords (25) are on the axially inner side relative to said structure.

27. A tyre according to one of Claims 22 to 26, also comprising at least one arrangement of secondary cords (31) which are arranged axially to the outside relative to said reinforcement structure.

28. A tyre according to Claim 27, in which the secondary cords (31) are non-metallic.

29. A tyre according to one of Claims 22 to 28, in which the main cords (20) have a high elasticity modulus.

30. A tyre according to one of Claims 22 to 29, in which at least one portion of the main cords (20) and the structure portion in the immediate vicinity of these cords are embedded in a rubber mix of a modulus greater than 25 MPa.

31. A tyre according to one of Claims 22 to 30, in which the reinforcement structure comprises, at the level of the bead (4), at least two axially spaced structure portions, with interposition of an arrangement between at least two of the adjacent portions.

32. A tyre according to one of Claims 22 to 31, in which the arrangements are surrounded on a first side by a first mix and on the other side by a second mix which is different from the first mix.

33. A tyre according to one of Claims 22 to 32, in which said end portion comprises a substantially radial meridian profile.
